# FASCICULE DE BREVET EUROPEEN

(11) **EP 2 247 549 B1**
(45) Date de publication et mention de la délivrance du brevet: **18.07.2012**
(21) Numéro de dépôt: 09718867.6
(22) Date de dépôt: 25.02.2009
(51) Int. Cl.: C03C 17/36, C03C 17/40

(54) **VITRAGE ANTISOLAIRE PRESENTANT UN COEFFICIENT DE TRANSMISSION LUMINEUSE AMELIORE**
SONNENSCHUTZGLASIERUNG MIT VERBESSERTEM LICHTÜBERTRAGUNGSKOEFFIZIENTEN
SOLAR-PROTECTION GLAZING HAVING AN IMPROVED LIGHT TRANSMISSION COEFFICIENT

(30) Priorité: 27.02.2008 FR 0851263
(43) Date de publication de la demande: 10.11.2010
(73) Titulaire: Saint-Gobain Glass France, 92400 Courbevoie (FR)
(72) Inventeur: GOUARDES, Eric, 75014 Paris (FR); HENRY, Sébastien, 91440 Bures (FR); BELLIOT, Sylvain, 75013 Paris (FR)
(74) Mandataire: Lucas, Francois
(86) Numéro de dépôt international: PCT/FR2009/050299
(87) Numéro de publication internationale: WO 2009/112759

(56) Documents cités:
- FR-A- 2 799 005
- US-A1- 2005 079 369

## Description

L'invention concerne les vitrages munis d'empilements de couches minces dont au moins l'une est fonctionnelle, c'est-à-dire qu'elle agit sur le rayonnement solaire. La présente invention concerne plus particulièrement les vitrages à couche(s) notamment ceux destinés à l'isolation thermique et/ou la protection solaire.

On entend par couche "fonctionnelle", au sens de la présente demande, la ou les couches de l'empilement qui confère à l'empilement l'essentiel de ses propriétés thermiques, par opposition aux autres couches, généralement en matériau diélectrique et ayant pour fonction une protection chimique ou mécanique desdites couches fonctionnelles, ou encore autre une fonction par exemple optique, d'adhésion, etc...

Les vitrages antisolaires selon l'invention sont plus particulièrement adapté pour équiper des bâtiments : en limitant, grâce aux couches minces, la quantité d'énergie transmise par le rayonnement solaire, ils permettent d'éviter un échauffement excessif à l'intérieur des locaux en été et contribue ainsi à limiter la consommation d'énergie nécessaire à leur climatisation.

L'invention concerne également ce type de vitrage une fois recouverte desdites couches minces, pour l'obtention d'un panneau de parement de façade, appelé de façon plus classique allège, et qui permet, en association avec des vitrages pour la vision, d'offrir des surfaces extérieures de bâtiments entièrement vitrées.

Les vitrages à couches fonctionnelles antisolaires sont soumis à un certain nombre de contraintes : en premier lieu, les couches employées doivent être suffisamment filtrantes vis-à-vis du rayonnement solaire et notamment vis-à-vis de la partie du rayonnement solaire non visible et située entre environ 780 nm et 2500 nm, habituellement appelé infrarouge solaire (IR solaire). En outre, ces performances thermiques doivent préserver l'aspect optique, l'esthétisme du vitrage : il est notamment souhaitable de pouvoir moduler le niveau de transmission lumineuse (T_{L}) du substrat.

Selon un autre aspect important, les couches fonctionnelles doivent aussi être suffisamment durables et en particulier résistantes aux contraintes physiques telles que des rayures et aux contraintes chimiques; elles doivent être notamment résistantes à l'humidité. Cela est d'autant plus important si, dans le vitrage une fois monté, elles sont sur l'une des faces extérieures du vitrage (par opposition aux faces "intérieures", tournées vers la lame de gaz intercalaire d'un double vitrage par exemple) ou si le vitrage est un vitrage simple, c'est-à-dire ne comprenant qu'un seul feuillet de verre.

Une autre contrainte s'impose également lors de l'élaboration des vitrages : lorsque ceux -ci sont constitués au moins en partie de substrats verriers, ils doivent le plus souvent subir un ou plusieurs traitements thermiques qui peut-être un bombage si on veut leur conférer un galbe (vitrine) mais qui est le plus souvent une trempe ou un recuit, notamment dans le secteur du bâtiment où l'on veut qu'ils soient plus résistants et moins dangereux en cas de chocs. Le fait que des couches soient déposées sur le verre avant son traitement thermique entraîne fréquemment leur détérioration et une modification sensible de leurs propriétés, notamment optiques. A contrario, déposer les couches après le traitement thermique du verre s'avère complexe et coûteux.

Un exemple de vitrage anti-solaire pour le bâtiment est donné par les brevets EP-0 511 901 et EP-0 678 483 : il s'agit de couches fonctionnelles sur le plan de la filtration des rayonnements solaires qui sont en alliage nickel-chrome, éventuellement nitruré, en acier inox ou en tantale, et qui sont disposées entre deux couches de diélectrique en oxyde métallique comme SnO₂, TiO₂ ou Ta₂O₅. Ces vitrages sont de bons vitrages anti-solaires, présentant des durabilités mécanique et chimique satisfaisantes, mais ne sont pas véritablement "bombables" ou "trempables" au sens précédemment décrit, car les couches d'oxydes entourant la couche fonctionnelle ne peuvent empêcher son oxydation lors du bombage ou de la trempe, ladite oxydation s'accompagnant d'une modification sensible de la transmission lumineuse, ainsi que de l'aspect général du vitrage dans son ensemble.

Plus récemment, il a été proposé, dans la demande de brevet EP 1218307, un empilement antisolaire dont la couche fonctionnelle comprend un métal choisi parmi Nb, Ta, Zr, éventuellement nitruré, la couche fonctionnelle étant surmontée de couches de protection à base de nitrure ou d'oxynitrure d'aluminium ou de silicium. L'empilement selon cette demande confère au vitrage une fonction anti-solaire permettant de bloquer l'IR solaire du rayonnement solaire incident. En outre, cet empilement s'est avéré résistant à la trempe et suffisamment durable mécaniquement et chimiquement pour être utilisé en face 2 d'un vitrage simple. L'inconvénient majeur de l'empilement décrit dans EP 1218307 est cependant que la couche fonctionnelle est relativement épaisse, de façon à obtenir l'effet anti-solaire recherché, et qu'il présente de ce fait une T_{L} très faible, de l'ordre de 10%, voire même inférieure.

Le document US 2005/079369 décrit des vitres pour automobiles et des vitrages architecturaux comprenant un substrat en verre muni d'un empilement de couches minces avec une couche fonctionnelle en Nb éventuellement nitrurée et une couche en Cr éventuellement nitrurée par-dessus, ainsi que deux couches de Si3N4 situées sous la couche fonctionnelle et sur la couche en Cr.

Le but de l'invention est ainsi d'augmenter sensiblement la transmission lumineuse T_{L} d'un tel vitrage antisolaire, sans pour autant qu'une telle augmentation conduise à une diminution sensible des propriétés d'isolation thermique du vitrage, pouvant conduire des transferts thermiques excessifs entre l'intérieur et l'extérieur du bâtiment ou de l'habitacle protégé par ledit vitrage.

On connaît dans le domaine des vitrages susceptibles de répondre à une telle demande. Ces vitrages sont constitués d'une ou plusieurs couches minces fonctionnelles d'argent métallique Ag. De tels vitrages sont par exemple décrits dans la demande de brevet EP 718250. L'intégration au vitrage d'une ou plusieurs couches d'argent permet de façon bien connue de diminuer très fortement les transferts thermiques à travers le vitrage, en raison du caractère bas émissif des couches Ag, c'est-à-dire grâce à leur capacité à réfléchir une très grande partie des IR thermiques, situés entre 3 et 50 microns. II est alors possible d'obtenir, selon des techniques bien connues et notamment par l'ajout de couches interférentielles de matériaux diélectriques d'indice et d'épaisseur adaptées, des vitrages à forte transmission lumineuse mais dont le coefficient de transfert thermique reste cependant très faible.

Les couches de contrôle solaire à base de couches minces d'argent apparaissent ainsi très performantes pour l'isolation thermique mais leur durabilité mécanique et chimique est très limitée, notamment au contact d'une atmosphère humide et ne permet pas en particulier leur utilisation pour un simple vitrage. En outre cette solution est relativement chère à mettre en ceuvre pour un double vitrage.

L'invention consiste donc en la mise au point de nouveaux empilements de couches minces agissant sur le rayonnement solaire, en vue de fabriquer des vitrages de protection solaire améliorée. L'amélioration visée est notamment l'établissement d'un meilleur compromis entre durabilité, propriétés thermiques, propriétés optiques et fonction anti-solaire, en particulier transmission lumineuse, et aptitude à supporter les traitements thermiques sans dommage quand le substrat porteur de l'empilement est de type verrier.

Plus précisément, le but de la présente invention est donc de fournir un vitrage muni de couches minces lui conférant de bonnes propriétés antisolaire, une transmission lumineuse supérieure ou égale à 10 ou même 20 %, mais permettant cependant de conserver un coefficient de transfert thermique acceptable, grâce en particulier un coefficient d'émissivité α, tel que défini selon la norme européenne prEN 410, suffisamment faible, ledit vitrage de muni de ladite couche pouvant par ailleurs subir un traitement thermique, au sens précédemment expliqué.

Selon l'invention, un tel vitrage simple ou multiple a pu être obtenu présentant notamment :
- une transmission lumineuse supérieure ou égale à 10%, voire supérieure à 20% ou même à 30%, voire à 40%,
- une émissivité inférieure ou égale à 50%, de préférence inférieure à 40% ou même à 30%, voire à 20%,
- une résistance à un traitement thermique tel qu'un bombage ou une trempe, avec notamment la conservation des propriétés précédentes, ainsi qu'une résistance chimique, au sens précédemment décrit,
- une bonne durabilité chimique et mécanique.

L'objet de l'invention consiste ainsi en premier lieu en un substrat verrier transparent, comprenant au moins une feuille de verre munie d'un empilement de couches minces agissant sur le rayonnement solaire, présentant une transmission lumineuse supérieure ou égale à 10%, voire supérieure ou égale à 20% et une émissivité inférieure ou égale à 50%, voire inférieure à 40%, voire même inférieure à 30% ou à 20%, après un traitement thermique tel qu'un bombage ou une trempe, ledit empilement comprenant :
- une couche fonctionnelle à base de Niobium Nb, d'épaisseur comprise entre environ 5 nm et environ 35 nm,
- au moins une couche d'un autre matériau, choisi dans le groupe constitué par Ti, Mo, B, Al ou un alliage comprenant au moins l'un de ces éléments, disposée par rapport au substrat verrier au dessus de la couche fonctionnelle, ladite couche présentant une épaisseur comprise entre environ 1 nm et environ 5 nm.

Selon un mode possible, le substrat verrier transparent comprend au moins une feuille de verre munie d'un empilement de couches minces agissant sur le rayonnement solaire, présentant une transmission lumineuse supérieure ou égale à 20% et une émissivité inférieure ou égale à 50% après un traitement thermique tel qu'un bombage ou une trempe, ledit empilement comprenant :
- une couche fonctionnelle de Niobium Nb, d'épaisseur comprise entre environ 5 nm et environ 25 nm,
- au moins une couche d'un autre matériau, choisi dans le groupe constitué par Ti, Mo, B, Al ou un alliage comprenant au moins l'un de ces éléments, disposée par rapport au substrat verrier au dessus de la couche fonctionnelle, ladite couche présentant une épaisseur comprise entre environ 1 nm et environ 5 nm.

De préférence, une couche dudit matériau choisi dans le groupe constitué par Ti, Mo, B, Al est disposée au dessus de la couche fonctionnelle et une autre couche dudit matériau est disposée en dessous de la couche fonctionnelle.

Typiquement, la couche fonctionnelle à base de Niobium Nb a une épaisseur comprise entre environ 8 nm et environ 20 nm, par exemple entre 8 et 15 nm.

Typiquement, la couche de matériau choisi dans le groupe constitué par Ti, Mo, B, Al a une épaisseur comprise entre environ 1 nm et environ 3 nm.

De préférence, ledit matériau est le Ti.

Selon l'invention, l'ensemble de la couche fonctionnelle et de la ou des couche(s) dudit matériau est entouré d'au moins une couche supplémentaire à base de nitrure d'aluminium, d'oxynitrure d'aluminium, de nitrure de silicium, ou d'oxynitrure de silicium, ou d'un mélange d'au moins deux de ces composés, l'épaisseur de la ou desdites couches supplémentaires étant ajustée pour optimiser la transmission lumineuse du vitrage.

Par exemple, la ou lesdites couches supplémentaires sont à base de nitrure de silicium et sont disposées respectivement au dessus et en dessous dudit ensemble.

Selon un mode possible, la couche à base de nitrure de silicium disposé au dessus dudit ensemble est plus épaisse que la couche disposée en dessous de l'ensemble d'au moins un facteur 1,2, notamment d'au moins un facteur 1,5 à 1,8. Bien entendu, dans le cadre de la présente invention, toutes les combinaisons particulières entre deux ou plus des valeurs et/ou intervalles précédents, sont envisagés, même s'ils ne sont pas spécifiquement décrits, pour des raisons de clarté.

L'invention se rapporte également à un vitrage monolithique ou à un double vitrage incorporant le substrat tel que précédemment décrit, l'empilement de couches minces étant disposé en face 2 du vitrage monolithique ou du double vitrage ou en face 3 du double vitrage, en numérotant les faces du ou des substrats de l'extérieur vers l'intérieur du bâtiment ou de l'habitacle qu'il équipe.

Selon un mode, le vitrage monolithique ou le double vitrage est configuré pour présenter une transmission lumineuse T_{L} supérieure à 10%, ou encore à 20%, voire supérieure à 30%, ou même supérieure à 40%. Le vitrage monolithique ou double vitrage peut également être configuré pour présenter une émissivité inférieure à 40%, voire inférieure à 30% ou même inférieure à 20%.

Enfin, la présente invention se rapporte à panneau de parement de façade de type allège incorporant au moins un substrat tel que précédemment décrit ou à une vitre latérale, une vitre arrière ou un toit pour automobile ou autre véhicule constitué par ou incorporant ledit substrat.

Selon l'invention, les couches fonctionnelles selon l'invention permettent d'obtenir une valeur de la transmission lumineuse du substrat relativement élevée, tout en conservant un effet anti-solaire notable, malgré l'épaisseur relativement faible de la couche fonctionnelle : les mesures effectuées montrent en effet un bon compromis entre le niveau de transmission lumineuse T_{L} et le coefficient de transfert thermique U du substrat à couches, mesuré par son émissivité α. Dans la présente description l'émissivité α est l'émissivité normale telle que définie selon la norme prEN410.

L'utilisation d'une couche très mince d'un métal du groupe Ti, Mo, B, Al, en particulier Ti, permet selon l'invention de garantir la trempabilité de l'empilement de couches sans dégradation conjointe des propriétés fonctionnelles de celles-ci. En particulier, la modification des propriétés optiques, notamment la transmission lumineuse, induites par un traitement thermique du type trempe, est faible. De même, l'émissivité de la couche fonctionnelle reste faible grâce à l'apport de cette fine couche métallique supplémentaire. Selon un mode possible de l'invention, la couche mince métallique du groupe Ti, Mo, B, Al est déposée au moins au dessus de la couche fonctionnelle de Nb. De préférence ladite couche est déposée au dessus et en-dessous de la couche de Nb.

Par les termes « au dessus » et « au dessous », il est fait référence dans la présente description à la position respective desdites couches par rapport au substrat verrier supportant l'empilement desdites couches.

Selon un mode de réalisation de l'invention, il est préférable de déposer également une surcouche à base de nitrure de silicium ou d'aluminium (Si₃N₄ et AIN en abrégé) ou d'oxynitrure de silicium ou d'aluminium (SiON et AlNO en abrégé, sans préjuger des quantités respectives en Si, O et N). L'ajustement de l'épaisseur de telles couches est effectué de manière à obtenir un effet antireflet permettant d'optimiser la transmission lumineuse du vitrage à couche. De telles couches peuvent également avoir, dans une moindre mesure, un rôle de protection des couches fonctionnelles de l'invention. Sans sortir du cadre de l'invention, il est également possible selon l'invention de doper ces couches par des éléments du type Zr, B, etc., de manière à modifier la couleur en transmission et/ou en réflexion du vitrage, selon les techniques bien connus de l'art.

De préférence, l'empilement de couches selon l'invention comprend entre le substrat et la couche fonctionnelle, au moins une sous-couche en matériau diélectrique transparent, notamment choisi, comme pour la surcouche, en nitrure ou oxynitrure de silicium et/ou en nitrure ou oxynitrure d'aluminium, ou encore en oxyde de silicium SiO₂. Sa présence peut notamment permettre de moduler avec plus de souplesse l'aspect optique conféré par l'empilement de couches à son substrat porteur. En outre, en cas de traitement thermique, elle peut constituer une barrière supplémentaire, notamment vis-à-vis de l'oxygène et des alcalins du substrat en verre, espèces susceptibles de migrer à la chaleur et de dégrader l'empilement.

Une variante très préférée de l'invention peut par exemple consister à utiliser à la fois une surcouche et une sous-couche à base de nitrure de silicium.

L'épaisseur de la surcouche est de préférence comprise entre 5 et 70, notamment entre 40 et 60 nm. L'épaisseur de la sous-couche optionnelle est de préférence comprise entre 5 et 120 nm.

Quand il s'agit d'une sous-couche unique du type Si₃N₄, elle est par exemple comprise entre 30 et 50 nm.

La sous-couche et/ou la surcouche peuvent en fait faire partie d'une superposition de couches en matériau diélectrique. L'une ou l'autre peut ainsi être associée à d'autres couches d'indices de réfraction différents. Ainsi, l'empilement de couches peut comporter entre le substrat et la couche fonctionnelle (ou au-dessus de la couche fonctionnelle) une alternance de trois couches haut indice/bas indice/haut indice, la couche à "haut indice" (au moins 1,8 à 2) ou l'une d'entre elles pouvant être la sous-couche de l'invention de type Si₃N₄, AIN, et la couche à "bas indice" (inférieur à 1,7 par exemple) pouvant être en oxyde de silicium SiO₂.

Tout particulièrement, un mode de réalisation très préféré de l'invention consiste en un vitrage simple ou multiple comprenant un substrat sur lequel est déposé un empilement comprenant une couche fonctionnelle à base de niobium surmontée de part et d'autre par une couche de Ti, l'ensemble des couches Ti/Nb/Ti étant lui-même surmonté par une surcouche à base de nitrure de silicium et par une sous-couche également à base de nitrure de silicium.

L'invention a aussi bien pour objet des vitrages simples ou "monolithiques", c'est-à-dire constitués d'un substrat unique, que les vitrages multiples isolants du type double vitrage. De préférence, qu'il s'agisse de vitrages monolithiques ou de doubles vitrages, les empilements de couches sont disposés en face 2 (conventionnellement, on numérote les faces des verres/substrats d'un vitrage de l'extérieur vers l'intérieur de l'habitacle/du local qu'il équipe), et procurent un effet de protection contre la rayonnement solaire. Sans sortir du cadre de l'invention, les empilements de couches peuvent également être déposés en face 3 des doubles vitrages.

L'invention a également pour objet le substrat à couches au moins partiellement opacifié par un revêtement de type laque ou émail, en vue de faire des allèges, où le revêtement opacifiant est en contact direct avec l'empilement de couches. L'empilement de couches peut donc être parfaitement identique pour le vitrage vision et pour l'allège.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

L'invention et ses avantages sont décrits avec plus de détails, ci-après, au moyen des exemples non limitatifs ci-dessous, selon l'invention et comparatifs. Dans tous les exemples et la description, les épaisseurs sont géométriques.

Tous les substrats sont en verre clair de 6 mm d'épaisseur de type Planilux commercialisé par la société Saint-Gobain Vitrage.

Toutes les couches sont déposées de façon connue par pulvérisation cathodique assistée par champ magnétique (magnétron). Les couches en métal (Nb, Ti) sont déposées à partir de cibles en métal en atmosphère inerte (100% Ar), les couches en nitrure de silicium Si₃N₄ à partir de la cible de de silicium (dopé avec 8% en masse d'aluminium) adéquate dans une atmosphère réactive contenant de l'azote (40% Ar et 60% N₂). Les couches en Si₃N₄ contiennent donc un peu d'aluminium.

### EXEMPLE 1 (selon EP 1218307)

Cet exemple présente une couche fonctionnelle en Nb et des sous couche et surcouche en Si₃N₄ selon la séquence suivante :
verre / Si₃N₄ (10 nm)/ Nb (35 nm) / Si₃N₄ (30 nm)
Après dépôt des couches, le substrat subit le traitement thermique suivant : chauffage à 620°C pendant 10 minutes puis trempe.

### EXEMPLE 2 (comparatif)

Dans cet exemple, on utilise la même couche fonctionnelle et les mêmes autres couches qu'à l'exemple 1, déposées sur le même substrat, mais avec des modifications dans les épaisseurs des sous-couches et surcouches en Si₃N₄:
verre / Si₃N₄ (40 nm) / Nb (10 nm) / Si₃N₄ (60 nm)
Le substrat revêtu de l'empilement subit ensuite le même traitement thermique que décrit dans l'exemple 1.

### EXEMPLE 3 (selon l'invention)

Cet exemple utilise la même séquence de couches qu'à l'exemple 2, déposée sur le même substrat, mais une couche très fine de Titane métallique est déposée au dessus de la couche fonctionnelle. L'empilement comprend ainsi la succession de couches suivante:
verre / Si₃N₄ (40 nm) / Nb (10 nm) /Ti (environ 1 nm)/Si₃N₄ (60 nm)

Le substrat revêtu de l'empilement subit ensuite le même traitement thermique que décrit dans l'exemple 1 ou 2.

### EXEMPLE 4 (comparatif)

Cet exemple utilise la même séquence de couches qu'à l'exemple 2, déposée sur le même substrat, mais une couche très fine de Titane métallique est déposée en dessous de la couche fonctionnelle. L'empilement comprend ainsi la succession de couches suivante:
verre / Si₃N₄ (40 nm) /Ti (environ 1 nm)/ Nb (10 nm) /Si₃N₄ (60 nm)

Le substrat revêtu de l'empilement subit ensuite le même traitement thermique que décrit dans l'exemple 1 ou 2.

### EXEMPLE 5 (selon l'invention)

Cet exemple utilise la même séquence de couches qu'à l'exemple 2, déposée sur le même substrat, mais une couche très fine de Titane métallique est déposée au dessus et en dessous de la couche fonctionnelle. L'empilement comprend ainsi la succession de couches suivante:
verre / Si₃N₄ (40 nm) /Ti (≈1 nm)/ Nb (10 nm) /Ti (≈1 nm)/Si₃N₄ (60 nm)

Le substrat revêtu de l'empilement subit ensuite le même traitement thermique que décrit dans l'exemple 1 ou 2.

### EXEMPLE 5b (selon l'invention)

Cet exemple utilise la même séquence de couches qu'à l'exemple 5, déposée sur le même substrat. L'empilement comprend ainsi la succession de couches suivante:
verre / Si₃N₄ (40 nm) /Ti (≈1 nm)/ Nb (19 nm) /Ti (≈1 nm)/Si₃N₄ (50 nm)

Le substrat revêtu de l'empilement subit ensuite le même traitement thermique que décrit dans l'exemple 1 ou 2.

### EXEMPLE 6 (comparatif)

Cet exemple utilise la même séquence de couches qu'à l'exemple 2, déposée sur le même substrat, mais une couche très fine de NiCr est déposée au dessus et en dessous de la couche fonctionnelle. L'empilement comprend ainsi la succession de couches suivante:
verre /Si₃N₄ (40 nm)/NiCr (≈1 nm)/Nb (10 nm)/NiCr(≈1 nm)/Si₃N₄ (60 nm)

Le substrat revêtu de l'empilement subit ensuite le même traitement thermique que décrit dans l'exemple 1 ou 2.

Le tableau 1 ci-dessous regroupe pour les exemples 1 à 6 précédents les données mesurées de transmission optique T_{L} (transmission lumineuse en % selon l'illuminant D₆₅) et la valeur d'émissivité α, calculée selon les normes prEN410 et NFEN 673.
Les données sont indiquées deux fois : avant traitement thermique et après traitement thermique. On a également reporté dans le tableau 1 l'augmentation relative Δα, en pourcentage, de la valeur d'émissivité α après la trempe.

**Tableau 1**

| **EXEMPLE** | **Traitement thermique** | **Propriétés optiques et énergétiques** | | |
|---|---|---|---|---|
| | | T_{L} | α (%) | Δα (%) |
| Exemple 1 | Avant | 11,3 | 14 | 29 |
| | Après | 18,5 | 18 | |
| Exemple 2 | Avant | 41,8 | 39 | 36 |
| | Après | 37,6 | 55 | |
| Exemple 3 (selon l'invention) | Avant | 40,9 | 35 | 20 |
| | Après | 38,8 | 42 | |
| Exemple 4 | Avant | 42,6 | 34 | 41 |
| | Après | 39,2 | 48 | |
| Exemple 5 (selon l'invention) | Avant | 41,7 | 32 | 16 |
| | Après | 40,3 | 37 | |
| Exemple 5b (selon l'invention) | Avant | 26,1 | 18 | 11 |
| | Après | 24,0 | 20 | |
| Exemple 6 | Avant | 39,1 | 34 | 41 |
| | Après | 35,2 | 48 | |

Les données reportées dans le tableau 1 montrent que les exemples 3, 5 et 5b selon l'invention permettent de fournir une transmission lumineuse beaucoup plus élevée que celle des vitrages antisolaires de l'art antérieur, tant en maintenant des performances énergétiques acceptables, après le traitement thermique et une trempe. La comparaison des valeurs d'émissivité obtenues après trempe pour l'exemple 4 avec les valeurs obtenues pour les exemples 3, 5 et 5b montrent que les meilleurs compromis sont obtenus lorsqu'une couche métallique de Ti est déposée au moins au dessus de la couche fonctionnelle de Nb.
Les résultats obtenus pour l'exemple 2, non conforme à la présente invention (l'empilement étant dépourvu de couche(s) métallique(s) de Ti), sont bien moins bons après la trempe: ces empilements ne sont clairement pas bombables/trempables au sens de l'invention. Le traitement thermique dégrade de façon trop importante les propriétés d'isolation thermique : les valeurs d'émissivité de ces vitrages apparaissent ainsi beaucoup trop élevées. Les résultats obtenus selon l'exemple 6, dans lequel la couche métallique déposée sur la couche fonctionnelle est cette fois du NiCr, sont similaires à ceux obtenus pour l'exemple 2, c'est-à-dire en l'absence de couche.

### EXEMPLE 7 (selon l'invention)

Pour cet exemple, un vitrage multiple a été construit à partir du substrat de l'exemple 5 (après trempe).
Le vitrage multiple est assemblé selon les techniques classiques selon une configuration 6/12/6^{clair} (air 100%), c'est-à-dire de telle façon qu'il est composé de deux feuilles de verre clair de 6mm d'épaisseur, séparé par une lame d'air de 12 mm. L'empilement de couches est disposé en face 2 du double vitrage.

Le double vitrage présente une transmission lumineuse de 36% mais une valeur de l'émissivité relativement basse, d'environ 37%, permettant la réflexion d'une majeure partie du rayonnement IR thermique. Les performances d'isolation énergétique sont ainsi très satisfaisantes, le coefficient de transfert thermique U ayant été mesuré égal à 2,30 W.m⁻².K⁻¹. A titre de comparaison, le coefficient U est égal à 2,90 W.m⁻².K⁻¹ pour un double vitrage simple sans couches. Toujours à titre de comparaison, les vitrages transparents bas-émissifs de l'art antérieur, incorporant comme couche fonctionnelle une couche d'argent difficilement trempable, présentent un coefficient de l'ordre de 1,8 W.m⁻².K⁻¹, mais sont beaucoup durables, à la fois en termes de résistance chimique et mécanique.

### EXEMPLE 8 (selon l'invention)

Dans cet exemple, on a cherché à obtenir un vitrage multiple à partir d'un substrat dont les couches de l'empilement présentent des épaisseurs adaptées pour maximiser cette fois les performances énergétiques du vitrage.

L'empilement comprend ainsi la succession de couches suivante:
verre / Si₃N₄ ( 40 nm) /Ti (≈1 nm)/ Nb (20 nm) /Ti (≈1 nm)/Si₃N₄ (54 nm)

Le substrat revêtu de l'empilement subit ensuite le même traitement thermique que décrit précédemment.
On a ensuite fabriqué un vitrage multiple à partir de ce substrat. De façon similaire à l'exemple 7, le vitrage multiple est assemblé selon une configuration 6/12/6^{clair} (air 100%). L'empilement de couches est disposé en face 2 du double vitrage.

Le double vitrage présente ainsi une transmission lumineuse, d'environ 20%, plus faible que celle de l'exemple 5, mais une valeur de l'émissivité beaucoup plus basse, d'environ 18%, permettant une forte réflexion du rayonnement thermique et des performances d'isolation énergétique fortement améliorées, le coefficient de transfert thermique U ayant cette fois été mesuré égal à 1,98 W.m⁻².K⁻¹.

En conclusion, les vitrages de protection solaire selon l'invention sont très avantageux pour équiper des bâtiments, sans exclure des applications dans l'automobile et tous véhicules : les vitres latérales, arrière, le toit-auto, qui peuvent d'ailleurs présenter des revêtements émaillés. Avec un empilement de couches fixé, notamment selon les valeurs de T_{L} et d'isolation thermique recherchées, on peut ainsi fabriquer des vitrages antisolaires permettant une vision améliorée et qui peuvent être bombés/trempés/recuits et présentant une très bonne durabilité mécanique et chimique.
Sans sortir du cadre de l'invention, on peut aussi faire des allèges à couches émaillées, plutôt que laquées, ce qui est industriellement très intéressant, l'émaillage se faisant pendant le procédé de trempe, alors que le laquage nécessite une étape supplémentaire de fabrication.

## Revendications

1. Substrat verrier transparent, comprenant au moins une feuille de verre munie d'un empilement de couches minces agissant sur le rayonnement solaire, présentant une transmission lumineuse supérieure ou égale à 10% et une émissivité inférieure ou égale à 50% après un traitement thermique tel qu'un bombage ou une trempe ***caractérisé en ce que*** ledit empilement comprend :
- une couche fonctionnelle de Niobium Nb, d'épaisseur comprise entre 5 nm et 35 nm,
- au moins une couche d'un autre matériau, choisi dans le groupe constitué par Ti, Mo, B, Al ou un alliage comprenant au moins l'un de ces éléments, disposée par rapport au substrat verrier au dessus de la couche fonctionnelle, ladite couche présentant une épaisseur comprise entre 1 nm et 5 nm.

2. Substrat verrier transparent selon la revendication 1, comprenant au moins une feuille de verre munie d'un empilement de couches minces agissant sur le rayonnement solaire, présentant une transmission lumineuse supérieure ou égale à 20% et une émissivité inférieure ou égale à 50% après un traitement thermique tel qu'un bombage ou une trempe ***caractérisé en ce que*** ledit empilement comprend :
- une couche fonctionnelle de Niobium Nb, d'épaisseur comprise entre 5 nm et 25 nm,
- au moins une couche d'un autre matériau, choisi dans le groupe constitué par Ti, Mo, B, Al ou un alliage comprenant au moins l'un de ces éléments, disposée par rapport au substrat verrier au dessus de la couche fonctionnelle, ladite couche présentant une épaisseur comprise entre 1 nm et 5 nm.

3. Substrat selon l'une des revendications 1 ou 2 dans lequel une couche dudit matériau choisi dans le groupe constitué par Ti, Mo, B, Al est disposée au dessus de la couche fonctionnelle et dans lequel une autre couche dudit matériau est disposée en dessous de la couche fonctionnelle.

4. Substrat selon l'une des revendications précédentes dans lequel la couche fonctionnelle à base de Niobium Nb a une épaisseur comprise entre 8 nm et 20 nm.

5. Substrat transparent selon l'une des revendications précédentes dans lequel la couche de matériau choisi dans le groupe constitué par Ti, Mo, B, Al, a une épaisseur comprise entre 1 nm et 3 nm.

6. Substrat transparent selon l'une des revendications précédentes, dans lequel ledit matériau est le Ti.

7. Substrat transparent selon l'une des revendications précédentes, dans lequel l'ensemble de la couche fonctionnelle et de la ou des couche(s) dudit matériau est entouré d'au moins une couche supplémentaire à base de nitrure d'aluminium, d'oxynitrure d'aluminium, de nitrure de silicium, ou d'oxynitrure de silicium, ou d'un mélange d'au moins deux de ces composés, l'épaisseur de la ou desdites couches supplémentaires étant ajustée pour optimiser la transmission lumineuse du vitrage.

8. Substrat selon la revendication 7, dans lequel la ou lesdites couches supplémentaires sont à base de nitrure de silicium et sont disposées respectivement au dessus et en dessous dudit ensemble.

9. Substrat selon la revendication 8, dans lequel la couche à base de nitrure de silicium disposé au dessus dudit ensemble est plus épaisse que la couche disposée en dessous de l'ensemble d'au moins un facteur 1,2, notamment d'au moins un facteur 1,5 à 1,8.

10. Vitrage monolithique ou double vitrage incorporant le substrat selon l'une des revendications précédentes, l'empilement de couches minces étant disposé en face 2 du vitrage monolithique ou du double vitrage ou en face 3 du double vitrage, en numérotant les faces du ou des substrats de l'extérieur vers l'intérieur du bâtiment ou de l'habitacle qu'il équipe.

11. Vitrage monolithique ou double vitrage selon la revendication 10, configuré pour présenter une transmission lumineuse T_{L} supérieure à 10%, voire supérieure à 20% ou même supérieure à 30%.

12. Vitrage monolithique ou double vitrage selon la revendication 11, configuré pour présenter une émissivité inférieure à 40%, voire inférieure à 30% ou même inférieure à 20%.

13. Panneau de parement de façade de type allège incorporant au moins un substrat selon l'une des revendications 1 à 9.

14. Vitre latérale, Vitre arrière ou toit pour automobile ou autre véhicule constitué par ou incorporant un substrat selon l'une des revendications 1 à 9.

## Claims

1. Transparent glass substrate comprising at least one glass sheet provided with a thin-film multilayer coating acting on solar radiation, having a light transmission equal to or greater than 10% and an emissivity equal to or less than 50% after a heat treatment, such as a bending or toughening treatment, ***characterized* in that** said multilayer coating comprises:
- a niobium Nb functional layer with a thickness of between 5 nm and 35 nm; and
- at least one layer of another material, chosen from the group formed by Ti, Mo, B, Al or an alloy comprising at least one of these elements, which is placed relative to the glass substrate above the functional layer, said layer having a thickness of between 1 nm and 5 nm.

2. Transparent glass substrate according to Claim 1, comprising at least one glass sheet provided with a thin-film multilayer coating acting on solar radiation, having a light transmission equal to or greater than 20% and an emissivity equal to or less than 50% after a heat treatment, such as a bending or toughening treatment, wherein said multilayer coating comprises:
- a niobium Nb functional layer with a thickness of between 5 nm and 25 nm; and
- at least one layer of another material, chosen from the group formed by Ti, Mo, B, Al or an alloy comprising at least one of these elements, which is placed relative to the glass substrate above the functional layer, said layer having a thickness of between 1 nm and 5 nm.

3. Substrate according to Claim 1 or 2, in which a layer of said material chosen from the group formed by Ti, Mo, B, Al is placed above the functional layer and in which another layer of said material is placed beneath the functional layer.

4. Substrate according to one of the preceding claims, in which the functional layer based on niobium Nb has a thickness of between 8 nm and 20 nm.

5. Transparent substrate according to one of the preceding claims, in which the layer of material chosen from the group formed by Ti, Mo, B, Al has a thickness of between 1 nm and 3 nm.

6. Transparent substrate according to one of the preceding claims, in which said material is Ti.

7. Transparent substrate according to one of the preceding claims, in which the combination of the functional layer and of the layer or layers of said material is surrounded by at least one additional layer based on aluminium nitride, aluminium oxynitride, silicon nitride or silicon oxynitride, or based on a mixture of at least two of these compounds, the thickness of said additional layer or layers being adjusted in order to optimize the light transmission of the glazing.

8. Substrate according to Claim 7, in which said additional layer or layers are based on silicon nitride and are placed above and below said combination respectively.

9. Substrate according to Claim 8, in which the layer based on silicon nitride placed above said combination is thicker than the layer placed beneath the combination by at least a factor of 1.2, especially at least a factor of 1.5 to 1.8.

10. Monolithic glazing or double glazing incorporating the substrate according to one of the preceding claims, the multilayer coating of thin layers being placed on face 2 of the monolithic glazing or of the double glazing, or on face 3 of the double glazing, the faces of the substrate or substrates being numbered from the exterior to the interior of the building or of the passenger compartment that it equips.

11. Monolithic glazing or double glazing according to Claim 10, configured to have a light transmission T_{L} of greater than 10%, or even greater than 20% or 30%.

12. Monolithic glazing or double glazing according to Claim 11, configured to have an emissivity of less than 40%, or less than 30% or even less than 20%.

13. Wall cladding panel of the curtain-walling type, incorporating at least one substrate according to one of Claims 1 to 9.

14. Side window, rear window or sunroof for an automobile or other vehicle, formed by or incorporating a substrate according to one of Claims 1 to 9.

## Patentansprüche

1. Transparentes Glassubstrat, umfassend wenigstens eine Glasscheibe, die mit einem Stapel dünner Schichten versehen ist, welche auf die Sonnenstrahlung wirken, mit einer Lichttransmission von über oder gleich 10 % und einer Emissivität von unter oder gleich 50 % nach einer Wärmebehandlung wie einem Biegen oder einem Vorspannen, **dadurch gekennzeichnet, dass** der Stapel umfasst:
- eine Funktionsschicht aus Niob Nb, mit einer Dicke im Bereich zwischen 5 nm und 35 nm,
- wenigstens eine Schicht aus einem weiteren Material, ausgewählt aus der Gruppe bestehend aus Ti, Mo, B, Al oder einer Legierung, die wenigstens eines dieser Elemente umfasst, die bezogen auf das Glassubstrat oberhalb der Funktionsschicht angeordnet ist, wobei die Schicht eine Dicke im Bereich zwischen 1 nm und 5 nm aufweist.

2. Transparentes Glassubstrat nach Anspruch 1, umfassend wenigstens eine Glasscheibe, die mit einem Stapel dünner Schichten versehen ist, welche auf die Sonnenstrahlung wirken, mit einer Lichttransmission von über oder gleich 20 % und einer Emissivität von unter oder gleich 50 % nach einer Wärmebehandlung wie einem Biegen oder einem Vorspannen, **dadurch gekennzeichnet, dass** der Stapel umfasst:
- eine Funktionsschicht aus Niob Nb, mit einer Dicke im Bereich zwischen 5 nm und 25 nm,
- wenigstens eine Schicht aus einem weiteren Material, ausgewählt aus der Gruppe bestehend aus Ti, Mo, B, Al oder einer Legierung, die wenigstens eines dieser Elemente umfasst, die bezogen auf das Glassubstrat oberhalb der Funktionsschicht angeordnet ist, wobei die Schicht eine Dicke im Bereich zwischen 1 nm und 5 nm aufweist.

3. Substrat nach einem der Ansprüche 1 oder 2, wobei eine Schicht aus dem Material, das aus der Gruppe bestehend aus Ti, Mo, B, Al ausgewählt ist, oberhalb der Funktionsschicht angeordnet ist, und wobei eine weitere Schicht aus dem Material unterhalb der Funktionsschicht angeordnet ist.

4. Substrat nach einem der vorstehenden Ansprüche, wobei die Funktionsschicht auf der Basis von Niob Nb eine Dicke im Bereich zwischen 8 nm und 20 nm aufweist.

5. Transparentes Substrat nach einem der vorstehenden Ansprüche, wobei die Schicht aus dem Material, das aus der Gruppe bestehend aus Ti, Mo, B, Al ausgewählt ist, eine Dicke im Bereich zwischen 1 nm und 3 nm aufweist.

6. Transparentes Substrat nach einem der vorstehenden Ansprüche, wobei das Material Ti ist.

7. Transparentes Substrat nach einem der vorstehenden Ansprüche, wobei die Anordnung aus der Funktionsschicht und der Schicht oder Schichten aus dem Material von wenigstens einer zusätzlichen Schicht auf der Basis von Aluminiumnitrid, Aluminiumoxynitrid, Siliciumnitrid oder Siliciumoxinitrid oder eines Gemischs aus wenigstens zwei dieser Verbindungen umgeben ist, wobei die Dicke der zusätzlichen Schicht oder Schichten angepasst ist, um die Lichttransmission der Verglasung zu optimieren.

8. Substrat nach Anspruch 7, wobei die zusätzliche Schicht oder Schichten auf der Basis von Siliciumnitrid sind und oberhalb bzw. unterhalb der Anordnung angeordnet sind.

9. Substrat nach Anspruch 8, wobei die Schicht auf der Basis von Siliciumnitrid, welche oberhalb der Anordnung angeordnet ist, um wenigstens einen Faktor 1,2, insbesondere um wenigstens einen Faktor 1,5 bis 1,8 dicker ist als die Schicht, welche unterhalb der Anordnung angeordnet ist.

10. Monolithische Verglasung oder Doppelverglasung, die das Substrat nach einem der vorstehenden Ansprüche enthält, wobei der Stapel dünner Schichten - unter Nummerierung der Flächen des oder der Substrate von der Außenseite zur Innenseite des Gebäudes oder des Fahrgastraumes, das bzw. der damit ausgestattet ist - auf Fläche 2 der monolithischen Verglasung oder der Doppelverglasung oder auf Fläche 3 der Doppelverglasung angeordnet ist.

11. Monolithische Verglasung oder Doppelverglasung nach Anspruch 10, die ausgebildet ist, um eine Lichttransmission T_{L} von über 10 %, sogar über 20 % oder sogar über 30 % aufzuweisen.

12. Monolithische Verglasung oder Doppelverglasung nach Anspruch 11, die ausgebildet ist, um eine Emissivität von unter 40 %, sogar unter 30 % oder sogar unter 20 % aufzuweisen.

13. Fassadenverkleidungspaneel vom Typ Brüstung, das wenigstens ein Substrat nach einem der Ansprüche 1 bis 9 enthält.

14. Seitenscheibe, Heckscheibe oder Dach für ein Kraftfahrzeug oder anderes Fahrzeug, die bzw. das von einem Substrat nach einem der Ansprüche 1 bis 9 gebildet ist oder eines enthält.
